# EUROPÄISCHE PATENTSCHRIFT

(11) **EP 3 423 309 B1**
(45) Veröffentlichungstag und Bekanntmachung des Hinweises auf die Patenterteilung: **19.08.2020**
(21) Anmeldenummer: 17700825.7
(22) Anmeldetag: 19.01.2017
(51) Int. Cl.: B60R 13/04, B60J 10/77

(54) **DICHT- UND BLENDLEISTE FÜR DIE B-SÄULE EINES PERSONENKRAFTWAGENS**
SEALING AND COVER STRIP FOR THE B PILLAR OF A PASSENGER VEHICLE
BAGUETTE D'ÉTANCHÉITÉ ET DE PAREMENT POUR LE MONTANT B D'UNE VOITURE PARTICULIÈRE

(30) Priorität: 04.03.2016 DE 102016002681
(43) Veröffentlichungstag der Anmeldung: 09.01.2019
(73) Patentinhaber: Cadea Gesellschaft Für Anwendung Und Realisierung Computerunterstützter Systeme Mbh, 82223 Eichenau (DE)
(72) Erfinder: ERTL, Harald, 82223 Eichenau (DE)
(74) Vertreter: Grünecker Patent- und Rechtsanwälte PartG mbB
(86) Internationale Anmeldenummer: PCT/EP2017/051022
(87) Internationale Veröffentlichungsnummer: WO 2017/148613

(56) Entgegenhaltungen:
- EP-A1- 1 695 808
- EP-A1- 2 113 422
- DE-U1- 20 304 269
- GB-A- 2 247 489
- US-A- 6 103 168

## Beschreibung

Die Erfindung bezieht sich auf eine Dicht- und Blendleiste für die B-Säule eines zwei- oder viertürigen Personenkraftwagens mit rahmenlosen Türen. Die B-Säule eines Personenkraftwagens ist zwischen der Vordertür und der Hintertür eines PKW angeordnet, oder im Falle eines Coupes zwischen Seitenscheibe Vordertür und der hinteren beweglichen oder festen Seitenverglasung eines Personenkraftwagens. Bei Fahrzeugen mit rahmenlosen Seitenscheiben sind die Dichtungen unmittelbar an der B-Säule angebracht. Üblicherweise weist in diesen Fällen die B-Säule eine Trägerblende und eine Dekorblende auf, die an der Längsseite, die einer versenkbaren Seitenscheibe zugeordnet ist, gemeinsam eine Nut bilden, in die ein Dichtungsprofil eingeclipst bzw. eingezogen ist. Eine solche Dichtleiste ist beispielsweise aus der DE 10 2004 041 741 B3 bekannt. Das Einziehen bzw. Einclipsen der Dichtung erfordert einen erhöhten Montageaufwand. Außerdem kann es vorkommen, dass insbesondere bei älteren Fahrzeugen die Dichtungen nicht mehr festsitzen, so dass zwischen der Dekorblende der B-Säule und der Dichtung ein optisch unschöner und in der Größe variierender Spalt entstehen kann. Die Dichtung selbst besteht aus zwei Profilen und drei anvulkanisierten Formecken.

Ferner zeigt die DE 203 04 269 U1 eine Dichtungsleiste für ein Fahrzeug, die zwei Formteile umfasst, die zwischen sich einen U-förmigen Raum zur Aufnahme einer Seitenscheibe des Fahrzeugs ausbilden. An jedes der Formteile ist ein Dichtungselement angeformt. Die Formteile werden jeweils an der Rahmenstruktur des Fahrzeugs befestigt.

Die EP 2 113 422 A1 offenbart ein Zierteil für die B-Säule eines Kraftfahrzeugs mit einem Trägerteil und einem Designteil. Das Designteil umfasst an seiner im eingebauten Zustand nach außenweisenden Seite eine Sichtfläche. Das Trägerteil umfasst einen entlang seiner Längsrichtung verlaufenden Glasführungskanal, in den eine Dichtung eingerastet werden kann.

In der GB 2 247 489 A ist eine Zierleistung zur Abdeckung einer B-Säule eines PKWs beschrieben. Die Zierleiste ist an einer ihrer Längsseiten am einem Flansch der B-Säule befestigt. An der anderen Längsseite der Zierleiste ist eine Dichtung zur Abdichtung einer versenkbaren Seitenscheibe angebracht.

Es ist daher Aufgabe der vorliegenden Erfindung, eine Dicht- und Blendleiste der eingangs genannten Art so zu gestalten, dass der Montageaufwand beim Herstellen des Fahrzeugs verringert, das optische Erscheinungsbild sowie die Qualität verbessert und die Kosten gesenkt werden.

Diese Aufgabe wird erfindungsgemäß durch die Merkmale des Anspruchs 1 gelöst. Die Blende besteht nunmehr aus zwei Hälften. Die Dekorblende inklusive angespritzter Dichtung und die Trägerblende mit angespritzter Dichtung werden zu einem Bauteil verbunden. Die Dichtung wird nunmehr also nicht mehr in die zwischen Trägerblende und Dekorblende gebildete Nut eingeclipst; die Dichtung ist vielmehr in zwei Hälften aufgeteilt, wobei die jeweils eine Hälfte mit der Dekorblende und die jeweils andere Hälfte mit der Trägerblende verbunden ist. Sobald Trägerblende und Dekorblende miteinander verbunden sind, bilden die beiden Hälften ein Dichtprofil, welches vorher einteilig ausgebildet war.

Auf besonders einfache Weise lassen sich die jeweiligen Dichtungshälften der Dichtung mit der Dekorblende und der Trägerblende durch Zwei-Komponenten-Spritzgießen verbinden. Hierzu muss lediglich beim Spritzvorgang eine der Formhälften ausgetauscht werden, um dann die zweite Komponente, hier das elastomere Material für die Dichtung, einzuspritzen.

Besonders bevorzugt wird, wenn die der Sichtfläche der Dekorblende zugewandte Seite der einen Dichtungshälfte spaltfrei fluchtend in die Sichtfläche der Dekorblende übergeht. Bei geeigneter Farbwahl des Kunststoffes für die Dekorblende und dem der Dichtungshälfte läßt sich an der B-Säule kaum ein Unterschied zwischen Dichtung und Dekorblende ausmachen.

Eine vorteilhafte Variante der Erfindung sieht vor, dass an beiden Längsseiten und an der Unterseite von Trägerblende und Dekorblende Dichtungen vorgesehen sind. Auf diese Weise kann auch die Scheibe der hinteren Fahrzeugtür rahmenlos ausgebildet sein.

Der Montageaufwand kann weiter dadurch verringert werden, wenn an dem oberen Ende der Trägerblende Eckstücke vorgesehen sind, die in die Scheibeneinfassung am Dachholm des Personenkraftwagens übergehen, wobei die Endstücke ebenso auf Trägerblende und Dekorblende verteilt durch Zwei-Komponenten-Spritzgießen hergestellt sind.

In gleicher Weise können die Dichtungshälften am unteren Ende Endstücke aufweisen, die einstückig mit den Blendenteilen spritzgegossen sind. Damit sind sämtliche Dichtungselemente sowie End- und Eckstücke mit insgesamt zwei Teilen verbunden. In vorteilhafter Weise können beide Teile, also Dekorblende und Trägerblende stoffschlüssig miteinander verbunden sein, beispielsweise durch Ultraschallverschweißen.

Im Folgenden wird ein Ausführungsbeispiel der Erfindung anhand einer Zeichnung näher erläutert. Es zeigen:
Fig.1 einen PKW mit einer B-Säule,
Fig. 2 eine Dicht- und Blendleiste für eine B-Säule gem. Fig. 1,
Fig. 3 eine Schnittansicht entlang der Linie III-III durch die Dicht- und Blendleiste gem. Fig. 2,
Fig. 4 eine vergrößerte Detaildarstellung des Details IV aus Fig. 3, und

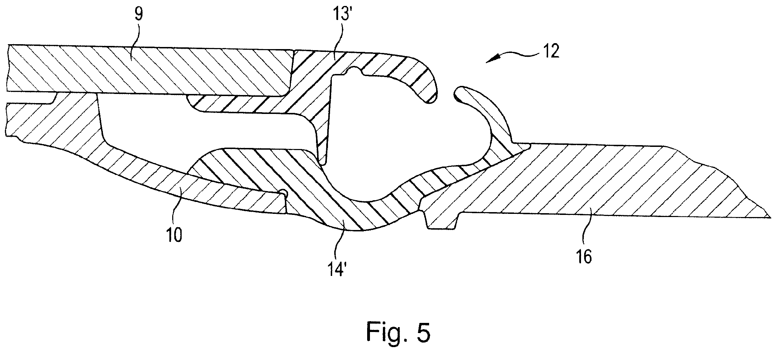

Fig. 5 in einer vergrößerten Detaildarstellung eine Schnittansicht entlang der Linie V-V durch die Dicht- und Blendleiste gem. Fig. 2.

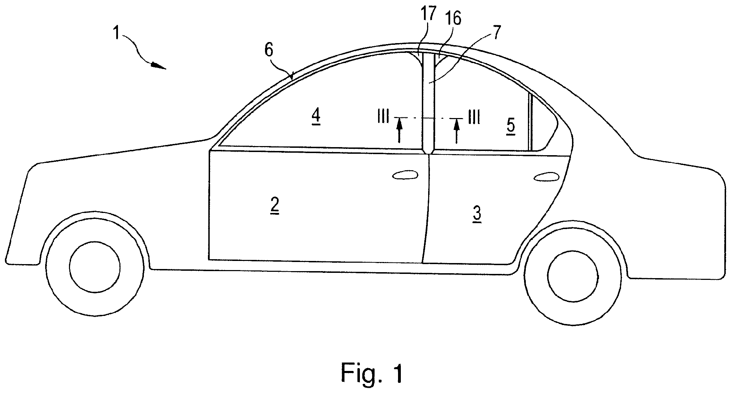

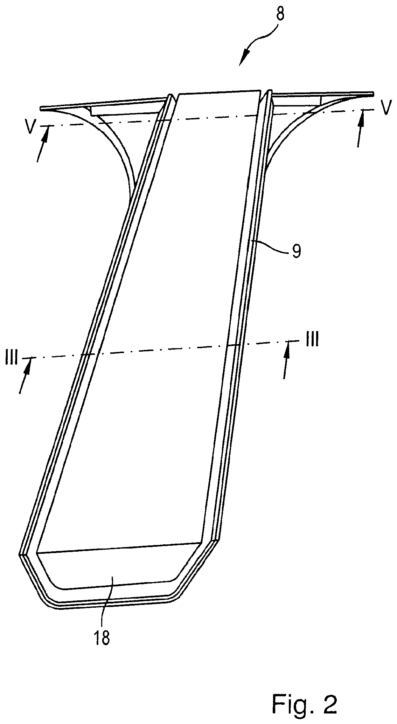

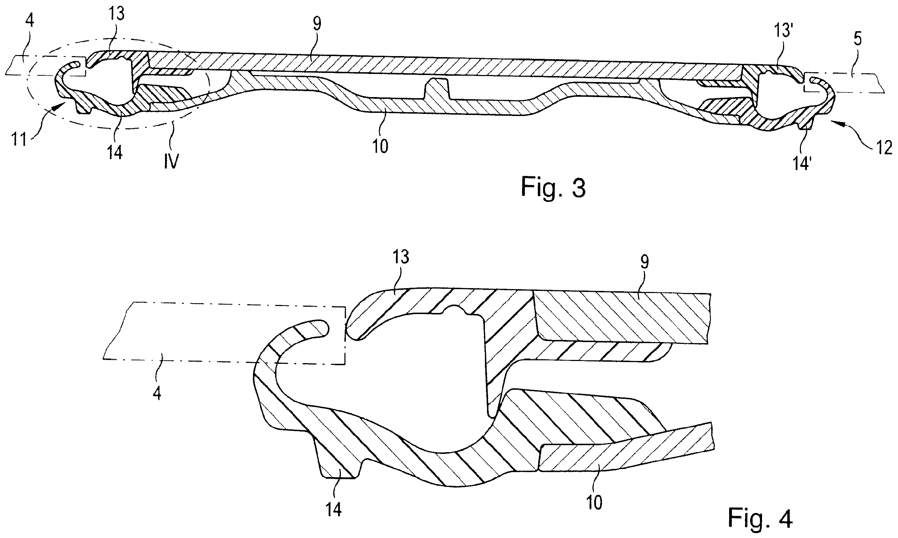

Bei dem in Fig. 1 dargestellten Personenkraftwagen handelt es sich um ein Fahrzeug, welches sowohl im Bereich der Vordertür 2 als auch im Bereich der Hintertür 3 eine rahmenlose Scheibe 4 bzw. 5 aufweist. Im Bereich des Dachholms 6 und der Türschächte werden die Scheiben 4 und 5 durch an sich bekannte Scheibeneinfassungen abgedichtet. Im Bereich der B-Säule 7 ist hierfür eine Dicht- und Blendleiste 8 vorgesehen, die in Fig. 2 näher dargestellt ist. Die Dicht- und Blendleiste 8 besteht, beim Betrachten der Fig. 3, aus einer äußeren Dekorblende 9, die der Fahrzeugaußenseite zugewandt ist, und einer darunter liegenden Trägerblende 10, mit welcher die Dicht- und Blendleiste 8 an der B-Säule des Fahrzeuges befestigt ist. An den gemeinsamen Längsseiten von Trägerblende 10 und Dekorblende 9 sind für die Seitenscheiben 4 und 5 Dichtungsprofile 11 und 12 vorgesehen. Diese Dichtungsprofile 11 und 12 bestehen aus je zwei Dichtungshälften 13 und 14 bzw. 13' und 14', von denen jeweils eine Hälfte 13 bzw. 13' mit der Dekorblende und die jeweils andere Hälfte 14 bzw. 14' mit der Trägerblende 10 verbunden ist. An dem oberen Ende der Dicht- und Blendleiste 8 sind Eckstücke 16 und 17 vorgesehen, die den Übergang von der Dicht- und Blendleiste 8 zur Scheibeneinfassung 6 am oberen Dachholm bilden. Diese Eckstücke 16 und 17 sind, ebenso wie die Dichthälften 14 und 14' durch Zwei-Komponenten-Spritzgießen mit der Trägerblende 10 einstückig hergestellt. In gleicher Weise sind die Dichthälften 13 und 13' einstückig mit der Dekorblende 9 verbunden, ebenfalls durch Zwei-Komponenten-Spritzgießen.

In ähnlicher Weise ist auch an der Dekorblende 9 und an der Trägerblende 10 ein den Türschacht abdeckendes Endstück 18 angespritzt. Die Dekorblende 9 und die Trägerblende 10 sind durch Ultraschall bzw. Laserverschweißen schlüssig miteinander verbunden. Alternativ können beide Bauteile auch miteinander verklebt sein.

Im Folgenden wird die Wirkungs- und Funktionsweise der Erfindung näher erläutert.

Dadurch, dass die Dichtprofile 11 und 12 in einzelne Hälften 13 und 14 bzw. 13' und 14' aufgetrennt sind, ist es möglich, diese Hälften durch Zwei-Komponenten-Spritzgießen einstückig mit der Dekorblende 9 bzw. der Trägerblende 10 herzustellen. Durch einfaches Verbinden der Dekorblende 9 mit der Trägerblende 10 werden somit die Dichtprofile 11 und 12 hergestellt, ohne dass die Dichtprofile nachträglich zwischen Trägerblende und Dekorblende eingefädelt werden müssen. Ein weiterer Vorteil ist, dass auch sämtliche anderen End- bzw. Eckstücke 16, 17 und 18 einstückig mit der Dekorblende 9 bzw. der Trägerblende 10 hergestellt werden können, so dass zum Fertigstellen der Dicht- und Blendleiste 8 lediglich die Dekorblende 9 mit der Trägerblende 10 verbunden werden muss. Auf diese Weise ist der Herstellungsprozess, insbesondere aber auch die Montage der Dicht- und Blendleiste deutlich vereinfacht. Durch den Einsatz geeigneter Materialien, wie gleitoptimierte, thermoplastische Elastomere für die Dichtungsfunktion, können die zeit- und kostenintensiven Montierprozesse des bisherigen Systems entfallen.

## Patentansprüche

1. Dicht- und Blendleiste (8) für die B-Säule (7) eines Personenkraftwagens (1) mit einer Trägerblende (10) und einer Dekorblende (9), die an zumindest einer ihrer gemeinsamen Längsseiten eine als Dichtungsprofil (11, 12) ausgebildete Dichtung für eine versenkbare Seitenscheibe (4, 5) aufweisen, wobei das Dichtungsprofil (11, 12) aus zwei Dichtungshälften (13, 13', 14, 14') besteht, wobei jeweils eine Hälfte (13, 13') mit der Dekorblende (9) und die jeweils andere Hälfte (14, 14') mit der Trägerblende (10) verbunden ist, **dadurch gekennzeichnet, dass** die Dekorblende (9) mit der daran angespritzten Dichtungshälfte (13, 13') und die Trägerblende (10) mit der daran angespritzten Dichtungshälfte (14, 14') zu einem Bauteil verbunden sind.

2. Dicht- und Blendleiste nach Anspruch 1, **dadurch gekennzeichnet, dass** die Dichtungshälften (13, 13', 14, 14') der Dichtprofile (11, 12) durch Zwei-Komponenten-Spritzgießen mit der Dekorblende (9) einerseits und der Trägerblende (10) andererseits hergestellt sind.

3. Dicht- und Blendleiste nach Anspruch 1 oder 2, **dadurch gekennzeichnet, dass** die der Sichtfläche der Dekorblende (9) zugewandte Seite der einen Dichtungshälfte (13, 13') spaltfrei fluchtend in die Sichtfläche der Dekorblende (9) übergeht.

4. Dicht- und Blendleiste nach einem der Ansprüche 1 bis 3, **dadurch gekennzeichnet, dass** an beiden Längsseiten von der Trägerblende (10) und der Dekorblende (9) Dichtungsprofile (11, 12) vorgesehen sind.

5. Dicht- und Blendleiste nach einem der Ansprüche 1 bis 4, **dadurch gekennzeichnet, dass** am oberen Ende der Trägerblende (10) Eckstücke (16, 17) vorgesehen sind, die in die Scheibeneinfassung (6) am Dachholm des Personenkraftwagens (1) übergehen, wobei die Eckstücke (16, 17) mit der Trägerblende (10) durch Zwei-Komponenten-Spritzgießen hergestellt sind.

6. Dicht- und Blendleiste nach einem der Ansprüche 1 bis 5, **dadurch gekennzeichnet, dass** die Dekorblende (9) an ihrem oberen Ende und an ihrem unteren Ende Endstücke (18) aufweist, die einstückig mit der Dekorblende (9) spritzgegossen sind.

7. Dicht- und Blendleiste nach einem der Ansprüche 1 bis 6, **dadurch gekennzeichnet, dass** die Dekorblende (9) mit der Trägerblende (10) stoffschlüssig verbunden ist.

## Claims

1. A sealing and cover strip (8) for the B-pillar (7) of a passenger car (1) with a support panel (10) and a decorative cover (9), which comprise on at least one of their common longitudinal sides a seal in the form of a sealing profile (11, 12) for a retractable lateral window (4, 5),
wherein the sealing profile (11, 12) consists of two sealing halves (13, 13', 14, 14'), one half (13, 13') being connected to the decorative cover (9) and the other half (14, 14') being connected to the support cover (10) respectively, **characterised in that** the decorative cover (9) with the sealing half (13, 13') moulded thereon and the support cover (10) with the sealing half (14, 14') moulded thereon are connected to form one component.

2. The sealing and cover strip according to claim 1, **characterised in that** the sealing halves (13, 13', 14, 14') of the sealing profiles (11, 12) are manufactured by two-component injection moulding together with the decorative cover (9) on the one hand and the support cover (10) on the other hand.

3. The sealing and cover strip according to claim 1 or 2, **characterized in that** the side of the one sealing half (13, 13') facing the visible surface of the decorative cover (9) merges into the visible surface of the decorative cover (9) in a gap-free and aligned manner.

4. The sealing and cover strip according to one of the claims 1 to 3, **characterized in that** sealing profiles (11, 12) are provided on both longitudinal sides of the support cover (10) and the decorative cover (9).

5. The sealing and cover strip according to one of the claims 1 to 4, **characterized in that** corner pieces (16, 17) are provided at the upper end of the support cover (10) which merge into the window frame (6) on the roof pillar of the passenger car (1), wherein the corner pieces (16, 17) are manufactured with the support cover (10) by two-component injection moulding.

6. Sealing and cover strip according to one of claims 1 to 5, **characterized in that** the decorative cover (9) comprises, at its upper end and at its lower end, end pieces (18) which are integrally injection-moulded with the decorative cover (9).

7. Sealing and cover strip according to one of claims 1 to 6, **characterised in that** the decorative cover (9) is connected to the support cover (10) in a positively bonded manner.

## Revendications

1. Baguette d'étanchéité et de parement (8) pour le montant B (7) d'une voiture particulière (1) avec un panneau de support (10) et un panneau décoratif (9), qui présentent sur au moins un de leurs côtés longitudinaux communs un joint sous la forme d'un profilé de joint (11, 12) pour une fenêtre latérale rétractable (4, 5), dans laquelle
le profilé de joint (11, 12) se compose de deux moitiés de joint (13, 13', 14, 14'), une moitié (13, 13') étant reliée au panneau décoratif (9) et l'autre moitié (14, 14') étant reliée au panneau de support (10) respectivement, **caractérisé en ce que** le panneau décoratif (9) avec sa moitié de joint (13, 13') moulée par injection et le panneau de support (10) avec sa moitié de joint (14, 14') moulée par injection sont reliés pour former un composant.

2. Baguette d'étanchéité et de parement selon la revendication 1, **caractérisée en ce que** les moitiés de joint (13, 13', 14, 14') des profilés de joint (11, 12) sont fabriquées par moulage par injection à deux composants avec le panneau décoratif (9) d'une part et le panneau de support (10) d'autre part.

3. Baguette d'étanchéité et de parement selon la revendication 1 ou 2, **caractérisée en ce que** le côté d'une moitié de joint (13, 13') tourné vers la surface visible du panneau décoratif (9) se prolonge par la surface visible du panneau décoratif (9) de manière alignée et sans interstices.

4. Baguette d'étanchéité et de parement selon l'une des revendications 1 à 3, **caractérisée en ce que** des profils de joint (11, 12) sont prévus sur les deux côtés longitudinaux du panneau de support (10) et du panneau décoratif (9).

5. Baguette d'étanchéité et de parement selon l'une des revendications 1 à 4, **caractérisée en ce que** des pièces d'angle (16, 17) sont prévues à l'extrémité supérieure du panneau de support (10), qui se fondent dans l'encadrement de fenêtre (6) au niveau du longeron de toit de la voiture particulière (1), les pièces d'angle (16, 17) avec le panneau de support (10) étant fabriquées par moulage par injection à deux composants.

6. Baguette d'étanchéité et de parement selon l'une des revendications 1 à 5, **caractérisée en ce que** le panneau décoratif (9) comporte des pièces d'extrémité (18) moulées par injection d'un seul tenant avec le panneau décoratif (9) à son extrémité supérieure et à son extrémité inférieure.

7. Bande d'étanchéité et de parement selon l'une des revendications 1 à 6, **caractérisée en ce que** le panneau décoratif (9) est relié au panneau de support (10) par liaison de matière.
